Europäisches Patentamt

European Patent Office

Office européen des brevets

(11) Veröffentlichungsnummer: **0 337 011**
**A1**

(12) **EUROPÄISCHE PATENTANMELDUNG**

(21) Anmeldenummer: 88117731.5

(51) Int. Cl.⁴: **B60P 7/13**

(22) Anmeldetag: 25.10.88

(30) Priorität: 13.04.88 DK 2013/88

(43) Veröffentlichungstag der Anmeldung:
18.10.89 Patentblatt 89/42

(84) Benannte Vertragsstaaten:
BE DE FR NL SE

(71) Anmelder: HFR - RODEKRO A/S
Engvej 2
DK-6230 Rodekro(DK)

(72) Erfinder: Jorgensen, Gert
c/o HFR-Rodekro A/S Engvej 2
DK-6230 Rodekro(DK)

(74) Vertreter: Hennicke, Albrecht, Dipl.-Ing. et al
Patentanwälte Dipl.-Ing. Buschhoff Dipl.-Ing.
Hennicke Dipl.-Ing. Vollbach
Kaiser-Wilhelm-Ring 24 Postfach 190 408
D-5000 Köln 1(DE)

(54) Tragvorrichtung mit Verriegelungselementen zum Aufsatteln und Befestigen von Wechselpritschen auf einem Fahrzeugrahmen.

(57) Tragvorrichtung (7) mit Verriegelungselementen (5) zum Aufsatteln und Befestigen einer Wechselpritsche od.dgl. auf einem Fahrzeugrahmen (13), die um eine horizontale Achse (18) am Fahrzeugrahmen (13) drehbar gelagert ist und mehrere, in unterschiedlichem Abstand von der Achse (18) angeordnete Tragflächen (6) aufweist, die in verschiedene Richtungen zeigende Verriegelungselemente (8) tragen und durch Schwenken der Tragvorrichtung wahlweise in die Arbeitsstellung geschwenkt werden können, um die Höhe der Auflagerstelle des Fahrzeuges der Höhe der jeweiligen Wechselpritsche anzupassen.

EP 0 337 011 A1

Fig. 3

## Tragvorrichtung mit Verriegelungselementen zum Aufsatteln und Befestigen von Wechselpritschen auf einem Fahrzeugrahmen

Die Erfindung betrifft eine Tragvorrichtung mit Verriegelungselementen zum Aufsatteln und Befestigen von Wechselpritschen auf einem Fahrzeugrahmen oder an mit diesem verbundenen Teilen.

Wechselpritschen können mit Hilfe von einklappbaren Stützbeinen zum Be- und Entladen auf dem Boden abgestellt werden. Um sie abzutransportieren, wird ein Fahrzeug, beispielsweise ein Lastkraftwagen oder ein Anhänger, rückwärts unter die Pritsche gefahren und dann, beispielsweise mit Hilfe seiner Luftdruckfederung, soweit angehoben, bis sich die Stützbeine vom Boden abheben. Hierbei greifen am Fahrzeugrahmen angebrachte Verriegelungszapfen in Löcher am Boden der Wechselpritsche ein und sichern diese gegen Verrutschen auf dem Fahrzeugrahmen. Anschließend werden die Stützbeine hochgeklappt und mit Schrauben so befestigt, daß die Wechselpritsche sicher am Fahrzeugrahmen befestigt ist.

Da verschiedene Fahrzeugtypen unterschiedlich hohe Rahmen haben, muß eine Wechselpritsche, die für ein Fahrzeug mit großer Rahmenhöhe gebaut ist, auf höheren Stützbeinen stehen als eine Wechselpritsche, die für ein Fahrzeug mit geringerer Rahmenhöhe konstruiert ist. Ein Fahrzeug mit niedrigem Fahrzeugrahmen kann deshalb nicht ohne weiteres für eine auf hohen Stützbeinen stehende Pritsche verwendet werden, da der mögliche Hub des Fahrzeuges zu gering ist und die Wechselpritsche nicht mehr angehoben werden kann. Um verschiedene Typen von Wechselpritschen mit dem gleichen Fahrzeug transportieren zu können, war es bisher erforderlich, die Auflagerhöhe des Fahrzeugrahmens mit Hilfe eines Zwischenrahmens der Standhöhe der jeweiligen Wechselpritsche anzupassen.

Dies hat den Nachteil, daß die Nutzlast des Fahrzeuges um das Gewicht des Zwischenrahmens verringert wird. Außerdem erfordert die Montage des Zwischenrahmens einen erheblichen Zeitaufwand, was bei Rangierfahrten im Bereich der Be- und Entladestationen der Wechselpritschen störend ist, so daß oft mehrere Rangierfahrzeuge zur Verfügung stehen müssen.

Aufgabe der Erfindung ist es, eine Beförderung verschiedener Typen von Wechselpritschen mit ein und demselben Fahrzeug zu ermöglichen, ohne auf einen Zwischenrahmen angewiesen zu sein.

Diese Aufgabe wird mit der Erfindung durch eine Tragvorrichtung gelöst, die mindestens zwei Tragflächen hat, die in verschiedene Richtungen zeigende Verriegelungselemente aufweisen und direkt oder indirekt an einem um eine im wesentlichen waagerechte Achse drehbaren Zapfen angebracht sind und unterschiedliche Abstände von der Achse haben. Hierdurch ist es möglich, unter den Tragflächen mit verschiedenen Abständen von der Schwenkachse eine passende Tragfläche auszuwählen und in die Arbeitsstellung hochzuschwenken und hierdurch die Auflagerhöhe jedem Pritschentyp anzupassen.

Es ist zweckmäßig, wenn der Zapfen der Tragvorrichtung in ein am Fahrzeugrahmen angeordnetes Rohr eingreift, das einen polygonalen Innenquerschnitt haben kann. Der Zapfen ist dann an seinem an der Tragvorrichtung befestigten Ende seinerseits mit einem dem Rohrinnenquerschnitt entsprechenden Zapfenteil versehen, der in das Rohr paßt. Wenn der Zapfen dann an seinem freien Ende noch einen in das Rohr passenden, zylindrischen Zapfenteil aufweist, ist es möglich, den Zapfen in verschiedenen Stellungen im Rohr formschlüssig zu verriegeln und die Verriegelungsstellungen einfach dadurch zu verändern, daß nur der prismatische Zapfenteil aus dem Rohr gezogen, die Tragvorrichtung dann in die gewünschte Position gedreht und anschließend der Zapfen wieder ganz in das Rohr geschoben wird.

Um ein unbeabsichtigtes Herausgleiten des Zapfens aus dem Rohr zu vermeiden, wie dies geschehen kann, wenn das Fahrzeug ohne Wechselpritsche fährt, ist es zweckmäßig, wenn der Zapfen in seinem zylindrischen Teil eine Ausnehmung aufweist, die in Zapfenlängsrichtung mindestens ebenso lang ist wie der prismatische Zapfenteil und in die ein am Rohr angebrachtes Sicherungselement eingreift. Diese Ausnehmung kann als umlaufende Nut ausgeführt sein oder eine im wesentlichen viereckige Form am Umfang des zylindrischen Zapfenteiles haben. Als Sicherungselement eignet sich beispielsweise eine Stellschraube, die durch die Rohrwand geschraubt ist.

Weitere Merkmale und Vorteile der Erfindung ergeben sich aus der anschließenden Beschreibung und den Zeichnungen, in denen eine bevorzugte Ausführungsform der Erfindung an einem Beispiel näher erläutert ist. Es zeigt:

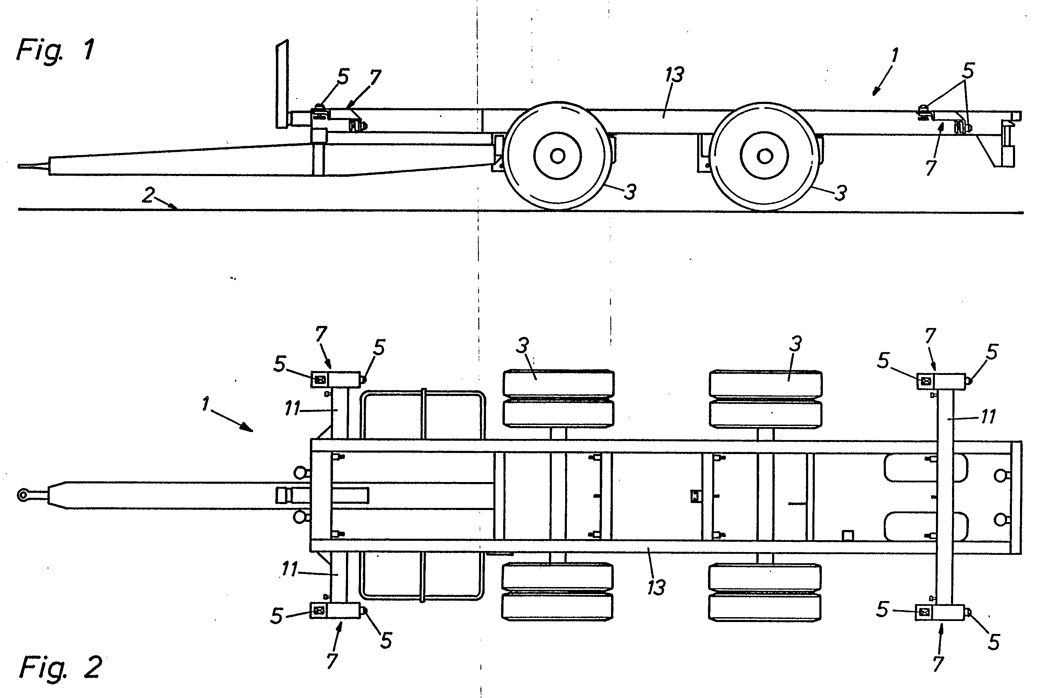

Fig. 1 einen Fahrzeuganhänger mit einem Fahrzeugrahmen, an dessen Auflagerstellen Tragvorrichtungen vorgesehen sind, in einer Seitenansicht,

Fig. 2 den Gegenstand der Fig. 1 in einer Aufsicht,

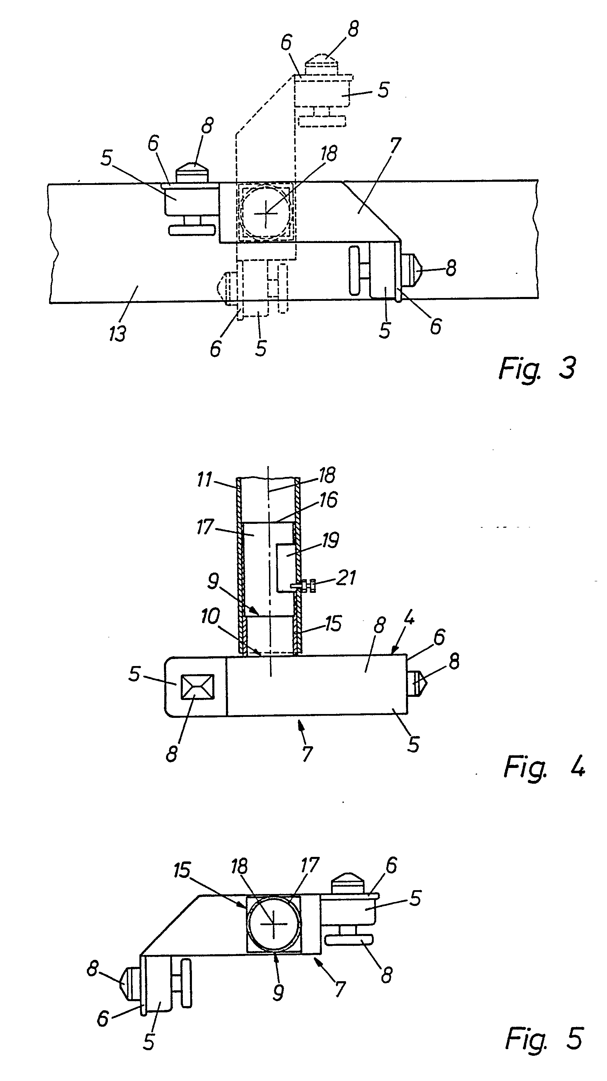

Fig. 3 eine an dem Fahrzeugrahmen angebrachte Tragvorrichtung in zwei verschiedenen Stellungen in einer Seitenansicht,

Fig. 4 den Gegenstand der Fig. 3 in einer Aufsicht, wobei ein Teil der Vorrichtung zur besseren Übersichtlichkeit geschnitten dargestellt ist,

Fig. 5 eine Tragvorrichtung in nicht-montiertem Zustand von der Zapfenseite her gesehen.

In den Zeichnungen bezeichnet 1 einen Fahrzeuganhänger mit einem Fahrzeugrahmen 13, wie er zum Transport von Wechselpritschen verwendet wird. An den vorderen und hinteren Enden des Fahrzeugrahmens sind Vierkantrohre 11 quer zur Längsrichtung des Fahrzeuges 1 angebracht, an deren äußeren, offenen Enden je eine Tragvorrichtung 7 befestigt ist.

Um die Auflagerhöhe über der Fahrbahn 2 zu verändern, sind die Tragvorrichtungen 7 um eine Schwenkachse 18 drehbar und feststellbar an den Vierkantrohren 11 gelagert und weisen zwei Tragflächen 6 auf, die in zueinander senkrechte Richtungen weisen und die von der Schwenkachse 18 unterschiedliche Abstände haben. Jede Tragfläche 6 ist mit einem Verriegelungselement 8 versehen, das zur Befestigung der Wechselpritsche auf dem Fahrzeugrahmen 13 dient.

Jede Tragvorrichtung 7 ist an ihrer einen Seite 4 mit einem Zapfen 9 versehen, der an seinem der Tragvorrichtung 7 zugewandten Ende 10 einen quadratischen Zapfenteil 15 aufweist. An seinem freien Ende 16 weist der Zapfen 9 einen zylindrischen Zapfenteil 17 auf. Die Kantenlänge des quadratischen Teil 15 und der Durchmesser des zylindrischen Teils 17 sind gleich groß und so gewählt, daß der Zapfen 9 mit einer leichten Spielpassung in dem Rohr 11 gelagert ist. Wenn der Zapfen 9 auf seiner ganzen Länge in das Rohr 11 gesteckt wird, verhindert die formschlüssige Vierkantverbindung zwischen Rohr 11 und prismatischem Zapfenteil 15 ein Verdrehen der Tragvorrichtung 7 gegenüber dem Fahrzeugrahmen 13. Erst wenn der Zapfen um die Länge des prismatischen Zapfenteils 15 aus dem Rohr herausgezogen ist, kann die Tragvorrichtung 7 leicht um die Schwenkachse 18 um einen bestimmten Winkel verdreht und in einer anderen Lage wieder festgestellt werden, indem der Zapfen 9 wieder vollständig in das Rohr 11 eingeschoben wird.

Um ein unbeabsichtigtes, vollständiges Herausgleiten des Zapfens 9 aus dem Rohr 11 zu verhindern, z.B. bei einer Fahrt ohne Wechselpritsche, ist der zylindrische Zapfenteil 17 mit einer Ausnehmung 19 versehen, die sich über einen Teil seines Umfangs erstreckt und die in axialer Richtung etwas länger ist als der prismatische Zapfenteil 15 und in die eine Schraube 21 eingreift, die als Sicherungselement durch die Rohrwand geschraubt ist. Durch diese Anordnung kann die Tragvorrichtung 7 nicht mehr unbeabsichtigt aus dem Rohr 11 gezogen werden. Durch einfaches Lösen der Schraube 21 ist es jedoch möglich, die Tragvorrichtung 7, z.B. zu Wartungszwecken, vollständig abzunehmen.

Die Erfindung ist nicht auf die hier beschriebene Ausführungsform beschränkt. Beispielsweise kann das Rohr einen zylindrischen Querschnitt haben und der eingesteckte Zapfen kann auf seiner ganzen Länge zylindrisch sein. Der Zapfen müßte dann in den verschiedenen Positionen von einem durch Querbohrungen in Rohr und Zapfen gesteckten Bolzen verriegelt werden. Auch ist es möglich, mehr als zwei Tragflächen an der Tragvorrichtung vorzusehen, wobei die Anzahl der verschiedenen Verriegelungsstellungen von der Art des verwendeten Polygonprofils abhängt.

## Ansprüche

1. Tragvorrichtung (7) mit Verriegelungselementen (5) zum Aufsatteln und Befestigen einer Wechselpritsche od.dgl. auf einem Fahrzeugrahmen (13) oder an mit diesem verbundenen Teilen (11), **dadurch gekennzeichnet,** daß mindestens zwei Tragflächen (6) vorgesehen sind, die in verschiedene Richtungen zeigende Verriegelungselemente (5) aufweisen und direkt oder indirekt an einem um eine im wesentlichen waagerechte Achse (18) drehbaren Zapfen (9) angebracht sind und unterschiedliche Abstände von der Achse (18) haben.

2. Vorrichtung nach Anspruch 1, **dadurch gekennzeichnet,** daß der Zapfen (9) der Tragvorrichtung (7) in ein am Fahrzeugrahmen (13) angeordnetes Rohr (11) eingreift.

3. Vorrichtung nach Anspruch 2, **dadurch gekennzeichnet,** daß das Rohr (11) einen polygonalen Querschnitt hat.

4. Vorrichtung nach einem der Ansprüche 1 bis 3, **dadurch gekennzeichnet,** daß der Zapfen (9) an seinem an der Tragvorrichtung (7) befestigten Ende (10) einen dem Innenquerschnitt des Rohres (11) entsprechenden, prismatischen Zapfenteil (15) und an seinem freien Ende (16) einen zylindrischen Zapfenteil (17) aufweist, dessen Durchmesser so groß ist, daß der Zapfen (9) mit seinen beiden Zapfenteilen in das Rohr (11) paßt.

5. Vorrichtung nach einem der Ansprüche 1 bis 4, **dadurch gekennzeichnet,** daß der Zapfen (9) in seinem zylindrischen Teil eine Ausnehmung (19) aufweist, die in Zapfenlängsrichtung minde stens ebenso lang ist wie der prismatische Zapfenteil (15) und in die ein am Rohr (11) angebrachtes Sicherungselement (21) eingreift.

6. Vorrichtung nahc Anspruch 5, **dadurch gekennzeichnet,** daß die Ausnehmung (19) als umlaufende Nut ausgeführt ist.

7. Vorrichtung nach Anspruch 5 oder 6, **dadurch gekennzeichnet,** daß die Ausnehmung (19) am Umfang des zylindrischen Zapfenteils (17) eine im wesentlichen viereckige Form aufweist.

Fig. 1

Fig. 2

Fig. 3

Fig. 4

Fig. 5

Hr 901 El

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 807 869 (DAMM) <br> * Ansprüche 2,3; Figuren 4-6 * | 1,2 | B 60 P 7/13 |
| A | | 5 | |
| | --- | | |
| X | DE-A-1 923 815 (CARROZZERIA PASINO) <br> * Figuren 5-9 * | 3,4 | |
| | ----- | | |

RECHERCHIERTE SACHGEBIETE (Int. Cl.4)

B 60 P 1/00
B 60 P 7/00

**Der vorliegende Recherchenbericht wurde für alle Patentansprüche erstellt**

| Recherchenort | Abschlußdatum der Recherche | Prüfer |
|---|---|---|
| BERLIN | 28-06-1989 | LUDWIG H J |

EPO FORM 1503 03.82 (P0403)